# EUROPÄISCHE PATENTANMELDUNG

(11) **EP 1 956 366 A1**
(43) Veröffentlichungstag der Anmeldung: **13.08.2008**
(21) Anmeldenummer: 08400002.5
(22) Anmeldetag: 05.02.2008
(51) Int. Cl.: G01N 21/95

(54) **Verfahren und Vorrichtung zur Detektierung von Defekten**

(30) Priorität: 06.02.2007 DE 102007006525
(71) Anmelder: Basler AG, 22926 Ahrensburg (DE); Q-Cells AG, 06766 Thalheim (DE)
(72) Erfinder: Fornasiero, Livio, 20535 Hamburg (DE); Gramatke, Martin, 22359 Hamburg (DE); Dekarz, Jens, 22941 Bargteheide (DE); Biemann, Volker, 22927 Grosshansdorf (DE)
(74) Vertreter: Hansmann, Dierk

(57) **Zusammenfassung**

Bei einem Verfahren und Vorrichtung zum Detektieren von Defekten, insbesondere von Mikrorissen, in dünnen Wafer-Platten, insbesondere in Halbleiter- oder Siliziumwafern, wird der Wafer (41) bzw. mit Silizium beschichteten Glasträgern mittels Licht durchleuchtet, das aus wenigstens zwei räumlich unterschiedlichen Richtungen (46,47) auf den Wafer trifft, und das transmittierte Licht wird mit wenigstens einer Kamera (48,49) aufgenommen. Das erzeugte Bild des Wafers wird in einer Bildverarbeitung ausgewertet. Das für die Beleuchtung verwendete Licht weist dabei Anteile im Infrarotbereich auf. Das Verfahren kann sowohl mit einer Hellfeldbeleuchtung als auch mit einer Dunkelfeldbeleuchtung angewendet werden.

## Beschreibung

Die Erfindung betrifft ein Verfahren zum Detektieren von Defekten, insbesondere von Mikrorissen, in dünnen Wafer-Platten, insbesondere in Halbleiter- oder Siliziumwafern, bzw. mit Silizium beschichteten Glasträgern, wobei mittels Licht der Wafer bzw. mit Silizum beschichteten Glasträgern beleuchtet wird und das transmittierte Licht der Wafer bzw. mit mit wenigstens einer Kamera aufgenommen wird, die wenigstens ein erstes Bild zumindest eines Abschnitts erzeugt, das in einer Bildverarbeitung ausgewertet wird.

Siliziumwafer werden in Photovoltaikanlagen eingesetzt, um aus Sonnenlicht Strom zu erzeugen. Basierend auf dem sogenannten Photoeffekt werden Elektronen durch Licht über eine Sperrschicht in dem Siliziumwafer transportiert, von wo aus sie nicht zurückfließen können. Diese Elektronen werden genutzt, um aus dem auftreffenden Licht Strom zu erzeugen. Der wirkungsgrad dieser Anlagen konnte in den letzten Jahren so weit verbessert werden, dass der Einsatz von Photovoltaikanlagen auch in mitteleuropäischen Ländern wirtschaftlich nutzbar geworden ist. Dabei werden mittlerweile Stückzahlen gefertigt, die einen industriellen Massenproduktionsprozess erforderlich machen.

Photovoltaikanlagen werden für die Dauer vieler Jahre betrieben und werden beispielsweise auf Hausdächern installiert, so dass ist ein langjähriger wartungsfreier Betrieb erforderlich ist, während dessen sich die Leistung der Anlage nicht verschlechtern sollte. Da eine mögliche Ursachen für eine schleichende Abnahme der Leistung von Photovoltaikanlagen das Vorhandensein von Mikrorissen in den Siliziumwafern sein kann, ist für die Effizienz und die dauerhafte Beständigkeit von Photovoltaik-Zellen die Qualität der zu ihrer Herstellung verwendeten Siliziumwafer von entscheidender Bedeutung.

Mikrorisse in Siliziumwafern sind mit dem Auge nicht zu erkennen. Auch bekannte optische Messmethoden wie die Hellfeld- und die Dunkelfeldmikroskopie sind nicht geeignet, solche Mikrorisse in Siliziumwafern zu detektieren, da das Material für sichtbares Licht nicht transparent ist. Andererseits aber ist Silizium für Infrarotlicht transparent. In diesem Zusammenhang ist aus der EP 0619484 B1 ein Verfahren zur Inspektion von Siliziumwafern, die bereits in Photovoltaikanlagen eingebaut sind, bekannt geworden, bei dem Infrarotlicht diffus auf die Oberfläche eines Siliziumwafers eingespiegelt wird. Das von dem zu untersuchenden Siliziumwafer reflektierte Infrarotlichtlicht wird mit einer Videokamera erfasst und eventuell vorhandene Mikrorisse werden mittels einer digitalen Bildauswertung detektiert. Da die Siliziumwafer im Infrarotbereich weitgehend transparent sind, wird jedoch bei diesem bekannten Verfahren ein erheblicher Teil des eingespiegelten Lichtes vom Wafer nicht reflektiert, sondern passiert diesen und wird für die Analyse nicht genutzt.

Deshalb wurde bereits in der JP-A-08220008 ein Verfahren der eingangs genannten Art vorgeschlagen, bei dem zu prüfende Halbleiter-Wafer mit diffusem Infrarotlicht durchleuchtet werden und das transmittierte Licht mit einer Kamera aufgenommen wird, um Risse zu detektieren. Risse sind im Durchleuchtungsmodus besser zu erkennen als in der Reflexion, da sie die Richtung des transmittierten Lichtes verändern und deshalb in der Regel als dunkle Linien erscheinen. Es kann sich jedoch das Problem ergeben, daß bei der Prüfung von Halbleiter-Wafern mit kristalliner Struktur die Kristallgrenzen ebenfalls eine Veränderung des transmittierten Lichtes bewirken. Deshalb wird möglicherweise eine Vielzahl von Hell-Dunkel-Kontrasten und -Konturen von der Kamera aufgenommen, von denen der größte Teil unschädlichen Kristallkorngrenzen zuzuordnen ist, so daß Risse mit einem derartigen Durchlichtverfahren nicht immer zuverlässig erkannt werden können.

Aufgabe der Erfindung ist es, ein Verfahren für die Detektierung von Defekten, insbesondere von Mikrorissen, in Siliziumwafern bereitzustellen, das in der Lage ist, solche Mikrorisse zuverlässig zu erkennen, unabhängig davon, in welcher räumlichen Richtung diese Risse im Material verlaufen. Ferner soll durch die Erfindung eine Vorrichtung zur Durchführung eines solchen Verfahrens bereitgestellt werden.

Die Lösung der ersten Aufgabe erfolgt erfindungsgemäß dadurch, dass die Durchleuchtung des Wafers in wenigstens zwei räumlich unterschiedlichen Richtungen erfolgt. Die Lösung der weiteren Aufgabe erfolgt durch eine Vorrichtung mit den kennzeichnenden Merkmalen des Patentanspruchs 15.

Dadurch, dass erfindungsgemäß wenigstens zwei Beleuchtungsrichtungen gewählt werden, die sich vorzugsweise um 90 Winkelgrad unterscheiden, können praktisch alle Mikrorisse detektiert werden, unter anderem auch solche, deren Erstreckung weitgehend mit der Richtung des aus einer Lichtquelle einfallenden Lichtes identisch ist. Auch ermöglicht eine Durchleuchtung des Siliziumwafers aus unterschiedlichen Richtungen eine erweiterte Klassifikation von etwaig in diesem Wafer vorhandenen Defekten mithilfe einer digitalen Bildverarbeitung.

Das erfindungsgemäße Verfahren wird dabei in seiner bevorzugten Ausführungsform mit einer Hellfeldbeleuchtung eingesetzt, bei der das von einer Lichtquelle ausgesandte Licht, das den Siliziumwafer passiert hat, direkt in eine Kamera fällt. Die Erfindung kann aber in gleicher weise auch mit einer Dunkelfeldbeleuchtung angewendet werden. Bei diesem ist die Richtung der Beleuchtung so gewählt, dass das Licht welches den Siliziumwafer durchdringt, nicht direkt in die Kamera fällt; vielmehr wird in diesem Fall nur solches Licht von der Kamera empfangen, das gebrochen oder gebeugt wurde.

Eine besonders hohe Zuverlässigkeit ergibt sich aus der in vorteilhafter Weiterbildung der Erfindung vorgesehenen Verwendung von drei Beleuchtungsrichtungen, die im Raum um jeweils 90 Winkelgrad zueinander ausgerichtet sind. Bei einer solchen Anordnung liegt jeder Riss aus wenigstens einer Perspektive räumlich diagonal zur Beleuchtungsrichtung. Zur weiteren Erhöhung der Zuverlässigkeit ist es selbstverständlich weiterhin auch möglich, mehr als drei Beleuchtungsrichtungen für die Analyse vorzusehen. Allerdings wird durch jede weitere Beleuchtungsrichtung das Verfahren langsamer, was die Kosten bei einem Fertigungsprozess erhöhen kann.

Für die erfolgreiche Durchführung des erfindungsgemäßen Verfahrens ist es dabei unerheblich, ob die Detektion der Mikrorisse mit einer, zwei, drei oder mehr Kameras erfolgt. Die Kamera hat in allen Fällen die Funktion, ein Bild des transmittierten Infrarotlichtes zu erzeugen. Dort, wo im Bild bedingt durch Mikrorisse Veränderungen entstehen, kann die nachgeschaltete Bildverarbeitung die Abweichungen detektieren und den Fehler klassifizieren. Es spielt dabei auch keine Rolle, ob die Bilder von unterschiedlichen Bereichen des Siliziumwafers zeitgleich von mehreren Kameras aufgenommen werden oder ob diese zeitversetzt von den gleichen oder von sich überlappenden Bereichen mit nur einer Kamera aufgenommen werden.

Ebenso ist es äquivalent, ob eine Mehrzahl von Lichtquellen eingesetzt wird oder ob nur eine Lichtquelle verwendet wird und die unterschiedlichen Beleuchtungsrichtungen dadurch erzeugt werden, dass Spiegel, Prismen, Lichtleiter und dergleichen verwendet werden.

Schließlich besteht eine weitere äquivalente Form der Durchführung des erfindungsgemäßen Verfahrens darin, die Änderungen der Beleuchtungsrichtung dadurch zu erzeugen, dass der Siliziumwafer relativ zu nur einer Lichtquelle gedreht wird.

Für die Durchführung des erfindungsgemäßen Verfahrens stellen Halogenlampen besonders geeignete Lichtquellen dar. Diese liefern Licht auch im sichtbaren Bereich, jedoch mit einem Anteil im Infrarotbereich, der groß genug ist, um derartige Halogenlampen für die Durchleuchtung von Siliziumwafern einsetzen zu können. Generell ist Infrarotlicht im Wellenlängenbereich von ca. 900 bis 2000 Nanometern gut geeignet, um Siliziumwafer zum Zweck der Detektierung von Defekten anhand des hier beschriebenen Verfahrens zu durchleuchten. Da spezielle Infrarotsensoren vergleichsweise kostspielig sind, wird dieser Wellenlängenbereich bevorzugt genutzt, weil in diesem Fall in den Kameras Sensoren verwendet werden können, die ihrerseits aus Silizium gefertigt sind.

Mit dem erfindungsgemäßen Verfahren können Defekte in Wafern unabhängig von der Art der Herstellung dieser Wafer detektiert werden. Die untersuchten Siliziumwafer können sowohl monokristallin als auch polykristallin sein, auch kann das Verfahren auf durch Aufdampfen erzeugte Silizium-Dünnschichten angewendet werden.

In der Fließfertigung werden zudem häufig Zeilenkameras zur Erzeugung von Bildern der zu fertigenden Objekte eingesetzt. Derartige Zeilenkameras können ebenfalls für die Durchführung des erfindungsgemäßen Verfahrens eingesetzt werden. Als Lichtquelle für zeilenkameras werden dabei bevorzugt Linienlichter eingesetzt, d.h., eine Beleuchtung, die eine oder mehrere Lichtquellen, z. B. Halogenlampen, aufweist und deren Licht mittels einem oder mehrerer Lichtleiterkabel von einer Lichtquelle oder von mehreren Lichtquellen zum Objekt geführt wird, das zu beleuchten bzw. zu durchleuchten ist. Das Licht eines Linienlicht tritt häufig durch eine Zylinderlinse aus und wird so auf die zu beleuchtende Stelle fokussiert. Üblicherweise tritt das Licht eines Linienlichts zwar senkrecht zu Längsachse des Linienlichtes aus, es sind aber auch Linienlichter bekannt, bei denen das Licht diagonal zur Längsachse des Linienlichtes austritt. Derartige Linienlichter mit diagonalem Lichtaustritt sind in besonderer Weise für die Durchführung des erfindungsgemäßen Verfahrens geeignet, um unterschiedliche Beleuchtungswinkel zu realisieren.

Nachfolgend sollen die Erfindung anhand von in den Zeichnungen dargestellten Ausführungsbeispielen näher erläutert werden. Es zeigen:
- Fig. 1: einen Siliziumwafer mit Mikrorissen sowie mit Lichteinfall aus zwei Beleuchtungsrichtungen,
- Fig. 2: eine schematische Darstellung einer ersten Anordnung zur Detektion von Defekten in Siliziumwafern,
- Fig. 3: eine schematische Darstellung einer zweiten Anordnung zur Detektion von Defekten in Siliziumwafern und
- Fig. 4: eine schematische Darstellung einer dritten Anordnung zur Detektion von Defekten in Siliziumwafern, die die bevorzugte Ausführungsform darstellt.

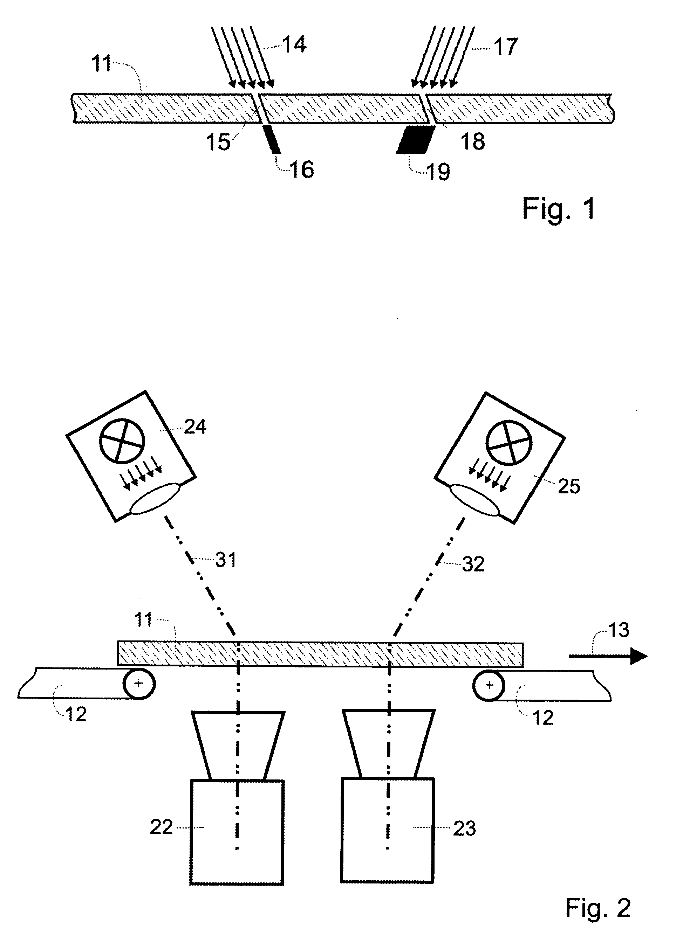

Der in Fig. 1 in einer Schnittdarstellung gezeigte Siliziumwafer 11 enthält zwei Mikrorisse 15, 18, die einen vergleichbaren räumlichen Verlauf aufweisen und die mit Infrarotlicht aus zwei Lichtquellen 14 bzw. 17 beleuchtet werden. Während bei der Durchleuchtung mit Infrarotlicht aus Richtung einer Lichtquelle 14 die Projektion 16 des Mikrorisses 15 eine nur geringe Ausdehnung aufweist, ist die Projektion 19 des Mikrorisses 18 aus Richtung einer zweiten Lichtquelle 17 vergleichsweise um ein Mehrfaches ausgedehnter.

Wird bei einer solchen Anordnung das transmittierte Licht mit einer unterhalb des Wafers angeordneten Kamera aufgenommen, so kommt es im Bereich der Mikrorisse 15, 18 zu dunklen Bereichen im Bild, die sich aus der Projektion 16, 19 der Mikrorisse ergeben. Diese dunklen Bereiche können mittels einer an die Kamera angeschlossenen Bildverarbeitungseinrichtung detektiert werden. Dadurch, dass der Siliziumwafer aus zwei unterschiedlichen Richtungen mit Infrarot durchstrahlt wird, wird die Wahrscheinlichkeit, einen solchen Mikroriss zu detektieren, signifikant erhöht. Die beiden Beleuchtungsrichtungen sollten sich dabei vorzugsweise um mindesten fünf Winkelgrad voneinander unterscheiden.

In Fig. 2 ist eine Vorrichtung zur Detektion von Mikrorissen in Siliziumwafern dargestellt. Ein Siliziumwafer 11 wird dabei durch eine Transportvorrichtung 12 in Richtung eines Pfeiles 13 transportiert. Die Durchleuchtung des Siliziumwafers 11 erfolgt mittels zweier Lichtquellen 24, 25, die im Fall des hier beschriebenen Ausführungsbeispiels Halogenlicht abstrahlen. Das transmittierte Licht der ersten Lichtquelle 24, dargestellt als Lichtstrahl 31, wird von einer ersten Kamera 22 aufgenommen. Das transmittierte Licht der zweiten Lichtquelle 25, dargestellt als Lichtstrahl 32, wird von einer zweiten Kamera 23 aufgenommen. Beide Lichtstrahlen 31 und 32 verlaufen im Fall des hier dargestellten Beispiels jeweils um etwa 30 Winkelgrad gegenüber dem Lot auf der Ebene des Siliziumwafers 11 geneigt, wobei die räumliche Anordnung der entsprechenden Lichtquellen 24 und 25 zueinander in diesem Beispiel spiegelsymmetrisch ist.

Durch die Verwendung zweier Kameras 22 und 23 werden zu jedem Zeitpunkt zwei räumlich unterschiedliche Bereiche des Siliziumwafers 11 detektiert und in einer in der Figur nicht dargestellten Bildverarbeitungseinheit analysiert, wobei mögliche Defekte, insbesondere Mikrorisse, im Wafer 11 festgestellt und angezeigt werden.

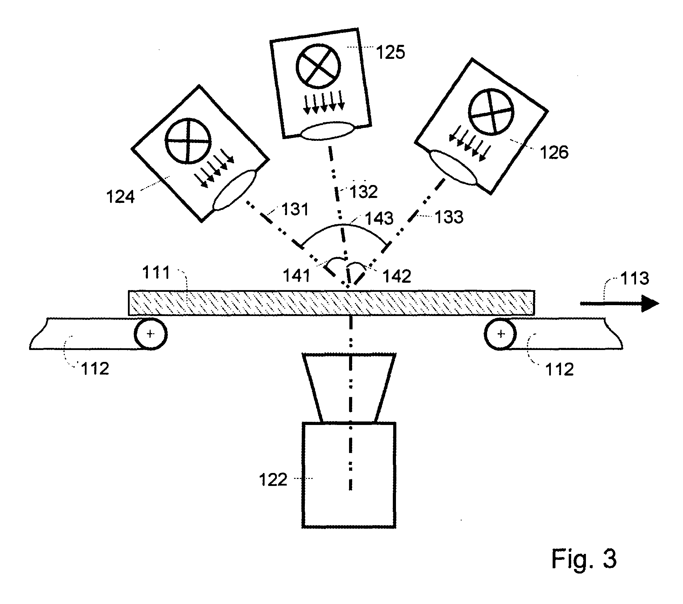

In Fig.3 ist eine zweite Vorrichtung zur Detektion von Mikrorissen in Siliziumwafern dargestellt, die in diesem Fall über eine aus drei Lichtquellen bestehende Beleuchtungsrichtung verfügt. Auch bei dieser Anordnung wird ein Siliziumwafer 111 mittels einer Transportvorrichtung 112 in Richtung des Pfeiles 113 transportiert. Die Durchleuchtung erfolgt mittels dreier Lichtquellen 124, 125, 126, die räumlich orthogonal zueinander angeordnet sind. Dabei bildet der Lichtstrahl 131 der ersten Lichtquelle 124 einen rechten Winkel 141 mit dem Lichtstrahl 132 der zweiten Lichtquelle 125, der Lichtstrahl 133 der dritten Lichtquelle 126 bildet einen rechten Winkel 142 relativ zum Lichtstrahl 132 der Lichtquelle 125 und schließlich bildet auch der Lichtstrahl 131 der ersten Lichtquelle 124 mit dem Lichtstrahl 133 der dritten Lichtquelle 126 einen rechten Winkel 143, so daß die drei Lichtstrahlen 131, 132, 133 der drei Lichtquellen 124, 125, 126 im Raum jeweils senkrecht zueinander verlaufen. Diese Anordnung stellt ein Optimum für die Verwendung dreier Lichtquellen zur Durchleuchtung dar, um einen Mikroriss in einem Siliziumwafer detektieren zu können. Selbst wenn ein Mikroriss exakt in der Ebene zweier Lichtstrahlen liegt, wirft der Strahl der dritten Richtung ein Bild in eine Kamera 122, wobei eine dunkle Projektion des Mikrorisses entsteht. Auch dieses Bild wird wieder in einer in der Figur nicht dargestellten Bildverarbeitungseinheit analysiert, wobei mögliche Defekte und insbesondere Mikrorisse im Wafer 111 festgestellt und angezeigt werden.

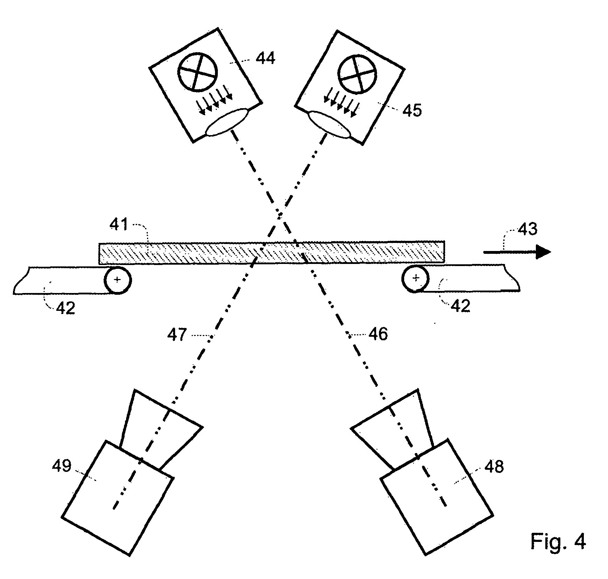

Schließlich ist in Fig.4 eine dritte Vorrichtung zur Detektion von Mikrorissen in Siliziumwafern dargestellt, bei der es sich um eine besonders bevorzugte Ausführungsform handelt. Im Gegensatz zu den in den beiden ersten Beispielen beschriebenen Anordungen, bei denen jeweils ein Dunkelfeldverfahren zum Einsatz kommt, arbeitet die in Fig. 4 dargestellte Anordnung nach dem Hellfeldverfahren. Auch bei dieser Anordnung wird wieder ein Siliziumwafer 41 mittels einer Transportvorrichtung 42 in Richtung des Pfeiles 43 transportiert, wobei hier die Durchleuchtung mittels zweier Lichtquellen 44 und 45 erfolgt. Die von diesen beiden Lichtquellen 44 und 45 ausgehenden Lichtstrahlen 46 und 47 verlaufen, wie im Fall des ersten Beispiels, um jeweils etwa 30 Winkelgrad gegenüber dem Lot auf der Ebene des Siliziumwafers 41 geneigt, wobei auch in diesem Beispiel die räumliche Anordnung der beiden Lichtquellen 44 und 45 spiegelsymmetrisch zueinander ist. Die durch den Siliziumwafer 41 hindurchtretenden Lichtstrahlen 46 und 47 werden gemäß dem hier verwendeten Hellfeldverfahren jeweils in einer Kamera 48, 49 aufgefangen, die auf der der zugeordneten Lichtquelle 44, 45 abgewandten Seite des Siliziumwafers 41 direkt im Strahlengang angeordnet ist, und in einer in der Figur nicht dargestellten Bildverarbeitungseinheit analysiert. In dieser werden wiederum mögliche Defekte und insbesondere Mikrorisse im Wafer 41 detektiert und zur Anzeige gebracht.

Das anhand von Fig. 4 beschriebene Hellfeldverfahren wird dabei in einer optimalen weise in einer Vorrichtung eingesetzt, bei der, wie bereits anhand von Fig. 3 beschrieben, eine aus drei Lichtquellen bestehende Beleuchtungsrichtung verwendet wird, bei der die Lichtquellen orthogonal zueinander, d.h. um jeweils 90° im Raum gegeneinander geneigt, angeordnet sind.

Entsprechend zählen diese Ausführungen auch für mit Silizium beschichteten Glasträger bzw. für andere transparente Trägermaterialien.

## Patentansprüche

1. Verfahren zum Detektieren von Defekten, insbesondere von Mikrorissen, in dünnen Wafer-Platten, insbesondere in Halbleiter- oder Siliziumwafern, bzw. mit Silizium beschichteten Glasträgern, wobei mittels Licht der Wafer bzw. der mit Silizum beschichteten Glasträger durchleuchtet wird und das transmittierte Licht mit wenigstens einer Kamera aufgenommen wird, die wenigstens ein erstes Bild zumindest eines Abschnitts erzeugt, das in einer Bildverarbeitung ausgewertet wird, **dadurch gekennzeichnet, dass** der Wafer (11, 41, 111) bzw. beschichtete Glasträger in wenigstens zwei räumlich unterschiedlichen Richtungen beleuchtet und das transmittierte Licht mittels wenigstens einer auf der dem Lichteinfall abgewandten Seite des Wafers (11, 41, 111) bzw. beschichteten Glasträgers angeordneten Kamera (22, 23, 48, 49, 122) aufgenommen wird.

2. Verfahren gemäß Anspruch 1 **dadurch gekennzeichnet, dass** sich die Beleuchtungsrichtungen um wenigstens fünf Winkelgrad voneinander unterscheiden.

3. Verfahren gemäß Anspruch 2, **dadurch gekennzeichnet, dass** die Beleuchtungsrichtungen jeweils einen Winkel von etwa 30 Grad mit dem Lot auf der Ebene des Wafers (11, 41, 111) bzw. beschichteten Glasträgers einschließen.

4. Verfahren gemäß einem der Ansprüche 1 bis 3, **dadurch gekennzeichnet, dass** die wenigstens eine Kamera (22, 23, 48, 49 122) senkrecht zur Ebene des Wafers (11, 41, 111) bzw. beschichteten Glasträgers ausgerichtet ist.

5. Verfahren gemäß gemäß einem der Ansprüche 1 bis 3, **dadurch gekennzeichnet, dass** die wenigstens eine Kamera (22, 23, 48, 49, 122) in einem beliebigen Winkel zur Ebene des Wafers (11, 41, 111) bzw. beschichteten Glasträgers ausgerichtet ist.

6. Verfahren gemäß einem der Ansprüche 1 bis 5, **dadurch gekennzeichnet, dass** die zwei unterschiedlichen Beleuchtungsrichtungen **dadurch** erzeugt werden, dass die Beleuchtung mit wenigstens zwei Lichtquellen (24, 25, 44, 45, 124, 125, 126) aus unterschiedlicher Richtung erfolgt.

7. Verfahren gemäß einem der Ansprüche 1 bis 5, **dadurch gekennzeichnet, dass** die zwei unterschiedlichen Beleuchtungsrichtungen **dadurch** erzeugt werden, dass die Orientierung des Wafers (11, 41, 111) bzw. beschichteten Glasträgers zu einer Lichtquelle (24, 25, 44, 45, 124, 125, 126) verändert wird.

8. Verfahren gemäß einem der Ansprüche 1 bis 7, **dadurch gekennzeichnet, dass** sich die beiden Beleuchtungsrichtungen um 90 Winkelgrad relativ zueinander unterscheiden.

9. Verfahren gemäß einem der Ansprüche 1 bis 8, **dadurch gekennzeichnet, dass** die Beleuchtung des Wafers (11, 41, 111) zusätzlich aus einer dritten Richtung erfolgt.

10. Verfahren gemäß Anspruch 9, **dadurch gekennzeichnet, dass** die drei Beleuchtungsrichtungen orthogonal zueinander angeordnet sind.

11. Verfahren gemäß einem der Ansprüche 1 bis 10, **dadurch gekennzeichnet, dass** das Licht Infrarotlicht ist.

12. Verfahren gemäß einem der vorgehenden Ansprüche **dadurch gekennzeichnet, dass** das Licht Infrarotlicht in einem Wellenlängenbereich von 900 bis 1.200 Nanometern ist.

13. Verfahren gemäß einem der Ansprüche 1 bis 12, **dadurch gekennzeichnet, dass** eine Hellfeldbeleuchtung eingesetz wird.

14. Verfahren gemäß einem der Ansprüche 1 bis 12, **dadurch gekennzeichnet, dass** eine Dunkelfeldbeleuchtung eingesetzt wird.

15. Vorrichtung zur Detektierung von Defekten, insbesondere von Mikrorissen, in dünnen Wafer-Platten, insbesondere in Halbleiter- oder Siliziumwafern, bzw. mit Silizium beschichteten Glasträgern, bestehend aus einer Beleuchtungsvorrichtung und wenigstens einer Kamera, wobei die Kamera durch den Siliziumwafer bzw. beschichteten Glasträger transmittiertes Licht aufnimmt und daraus ein Bild erzeugt, **dadurch gekennzeichnet, dass** sie wenigstens zwei die Oberfläche des Wafers (11, 41, 111) bzw. beschichtete Glasträger aus unterschiedlichen Richtungen beleuchtende Lichtquellen (24, 25, 44, 45, 124, 125, 126) umfaßt und daß wenigstens eine Kamera (22, 23, 48, 49, 122) auf der der dem Lichteinfall abgewandten Seite des Wafers (11, 41, 111) vorgesehen ist.

16. Vorrichtung gemäß Anspruch 15 **dadurch gekennzeichnet, dass** wenigstens zwei Kameras (22, 23, 48, 49) vorgesehen sind, die transmittiertes Licht aus unterschiedlichen Richtungen aufnehmen.

17. Vorrichtung gemäß Anspruch 15, **dadurch gekennzeichnet, dass** eine Kamera vorgesehen ist, die transmittiertes Licht aus unterschiedlichen Richtungen zeitlich nacheinander aufnimmt.

18. Vorrichtung gemäß einem der Ansprüche 15 bis 17, **dadurch gekennzeichnet, dass** die Lichtquelle aus wenigstens einem Linienlicht mit diagonalem Lichtaustritt besteht.
